# EUROPÄISCHE PATENTSCHRIFT

(11) **EP 2 103 410 B1**
(45) Veröffentlichungstag und Bekanntmachung des Hinweises auf die Patenterteilung: **24.08.2011**
(21) Anmeldenummer: 09002981.0
(22) Anmeldetag: 03.03.2009
(51) Int. Cl.: B29C 45/77

(54) **Kunststoff-Spritzgießmaschine mit Spritzkraftmesseinrichtung**
Plastic injection moulding machine with injection force measuring device
Machine de moulage par injection de matière plastique dotée d'un dispositif de mesure de la force d'injection

(30) Priorität: 18.03.2008 DE 102008014782
(43) Veröffentlichungstag der Anmeldung: 23.09.2009
(73) Patentinhaber: Sumitomo (SHI) Demag Plastics Machinery GmbH, 90571 Schwaig (DE)
(72) Erfinder: Stengel, Frank, 06571 Roßleben (DE); Schmidt, Holger, 06567 Bad Frankenhausen (DE); Scholz, Dietmar, 99427 Weimar (DE)
(74) Vertreter: Hübner, Gerd

(56) Entgegenhaltungen:
- EP-A- 0 230 488
- EP-A- 1 642 697
- EP-A- 1 741 537
- DE-A1- 10 114 006

## Beschreibung

Die Erfindung betrifft eine Kunststoff-Spritzgießmaschine mit den im Oberbegriff des Patentanspruches 1 angegebenen Merkmalen.

Eine derartige Spritzgießmaschine mit einer Einspritzeinheit ist beispielsweise aus der DE 101 14 006 C2 oder der EP-A-230 488 bekannt. Diese Einspritzeinheit umfasst als zentrales "Rückgrat" ein so genanntes Einspritzeinheiten-Gehäuse, das in der Regel einen massiven, kasten- oder rahmenartigen Grundaufbau aufweist. An diesem Einspritzeinheiten-Gehäuse ist der Plastifizierzylinder angebracht, in dem eine Schnecke zur Kunststoff-Spritzmaterial-Aufbereitung drehbar und für ihre Einspritzbewegung in Axialrichtung verschiebbar gelagert ist. Mit der Schnecke sind Antriebsmotoren gekoppelt, um deren Dreh- und Axialbewegung zu erzeugen. Diese Antriebsmotoren sind über einen Motorflansch am Einspritzeinheiten-Gehäuse gelagert.

Grundsätzlich ist es für die Prozessüberwachung beim Kunststoff-Spritzgießen wichtig, Kenntnis über die von der Schnecke bei ihrem Einspritzhub erzeugte Spritzkraft zu haben. Dafür sind aus dem Stand der Technik Spritzkraftmesseinrichtungen grundsätzlich bekannt. Bei der Spritzgießmaschine gemäß der oben angegebenen DE 101 14 006 C2 werden zu diesem Zweck am Motorflansch in einer achsumlaufenden, U-förmigen Vertiefung Dehnungssensoren in Form von Dehnungsmessstreifen oder piezoelektrischen Elementen angeordnet, mit deren Hilfe eine dehnungsbedingte Verformung des Motorflansches aufgrund der aus der Spritzkraft der Schnecke resultierenden Reaktionskraft erfassbar ist. Diese Reaktionskraft wird über die Schnecke auf die sie antreibende Motorwelle übertragen, die axial im Motorgehäuse abgestützt ist. Über diese Abstützung wird die Reaktionskraft auf das Motorgehäuse und damit auf den Flansch übertragen.

Die vorbekannte Spritzkraftmesseinrichtung hat verschiedene Nachteile. So ist der Motorflansch, auf dem die Dehnungssensoren angebracht sind, ein Bauteil innerhalb der Einspritzeinheit, das insbesondere während des Plastifizierungs- und Einspritzvorgangs dynamischen Störungen, wie Torsions- und Vertikalschwingungen, ausgesetzt ist. Diese werden direkt auf den Motorflansch übertragen und verfälschen damit das Messsignal der Dehnungssensoren.

Weiterhin ist die Anbringungszone der Dehnungssensoren großen Temperaturschwankungen unterworfen, da sie sich in unmittelbarer Nähe von erheblichen Wärmequellen, wie den Antriebsmotoren selbst und den Motorlagern, befindet.

Schließlich ist es bei der vorbekannten Ausführung der Spritzkraftmesseinrichtung nicht möglich, handelsübliche, industrielle Standard-Zugkraftsensoren einzusetzen. Die zu verwendenden Dehnungsmessstreifen sind demgegenüber diffiziler in ihrer Anwendung und erhöhen das Fehlerrisiko insbesondere durch fehlerhaftes Aufbringen.

Ausgehend von den geschilderten Problemen des Standes der Technik liegt der Erfindung die Aufgabe zugrunde, eine Kunststoff-Spritzgießmaschine mit einer konstruktiv einfachen, weitgehend störungsfrei messenden Spritzkraftmesseinrichtung anzugeben.

Diese Aufgabe wird durch die im Kennzeichnungsteil des Patentanspruchs 1 angegebenen Merkmale gelöst. Demnach weist die Spritzkraftmesseinrichtung einen Zugkraftsensor auf, der direkt in das Einspritzeinheiten-Gehäuse integriert ist. Die Anordnung ist dabei so, dass die von der Spritzkraft erzeugte, über die Motoren und den Motorflansch in das Einspritzeinheiten-Gehäuse eingeleitete Reaktionskraft der Spritzkraft detektierbar ist. Die Messstelle ist damit in einen Zugspannungsbereich des Gehäuses verlegt, also deutlich von dem beim Stand der Technik verwendeten Motorflansch entfernt. Störeinflüsse, wie Torsionsmomente und Temperaturschwankungen von den Motoren werden über die Gehäusekonstruktion in das Maschinenbett abgeleitet und beeinflussen daher den Zugkraftsensor nicht oder zumindest deutlich geringer. Zudem lehrt die Erfindung eine konstruktiv besonders einfache Integrationsweise des Zugkraftsensors in das Einspritzgehäuse, indem der sensor in einer Aussparung angeordnet und krafttechnisch an die Quer zur Reaktionskraft verlaufenden Randzonen des Einspritzeinheiten-Gehäuses zur Aussparung hin angekoppelt ist.

Die Verringerung der Störeinflüsse wird durch die bevorzugte Positionierung des Zugkraftsensors im Bereich der neutralen Faser der Wandung des Einspritzeinheiten-Gehäuses gemäß Anspruch 2 noch verbessert. Im Bereich der neutralen Faser wirken sich an der Wandung des Gehäuses angreifende Kräfte geringstmöglich aus.

Bevorzugtermaßen ist gemäß Anspruch 3 die Aussparung zur Aufnahme des Zugkraftsensors dabei als Durchbrechung der Wandung des Einspritzeinheiten-Gehäuses ausgeführt. Damit ist der Montageort insbesondere auch im Hinblick auf einen Austausch des Sensors gut zugänglich.

Die Verwendung industrieller Standard-Zugkraftsensoren nach Anspruch 4 stellt eine einerseits kostengünstige Alternative dar, die andererseits eine hohe Messgenauigkeit und Zuverlässigkeit der Spritzkraftermittlung mit sich bringt.

Durch die in Anspruch 5 angegebene Verwendung zweier gegenüberliegend bezogen auf die zentrale Spritzachse in das Einspritzeinheiten-Gehäuse integrierter Zugkraftsensoren kann die Messgenauigkeit abermals verbessert werden.

Gemäß einer weiteren bevorzugten Ausführungsform der Erfindung gemäß Anspruch 6 ist es möglich, ein und dieselben Sensoren mit gleichem Messbereich für unterschiedliche zu erfassende Spritzkräfte, also unterschiedliche Maschinenklassen, zu verwenden.

Weitere Merkmale, Einzelheiten und Vorteile der Erfindung sind der nachfolgenden Beschreibung entnehmbar, in der ein Ausführungsbeispiel anhand der beigefügten Zeichnungen näher erläutert wird. Es zeigen:
- Fig. 1: eine schematische Teilansicht einer Einspritzeinheit einer Kunststoff-Spritzgießmaschine,
- Fig. 2: eine Perspektivansicht der Einspritzeinheit gemäß Fig. 1,
- Fig. 3: eine vergrößerte Detailperspektive der Einzelheit III gemäß Fig. 2,
- Fig. 4: einen ausschnittsweisen Horizontalschnitt entlang der Schnittlinie IV-IV nach Fig. 1, und
- Fig. 5: einen Vertikalschnitt gemäß der Schnittlinie V-V nach Fig. 4.

In den Zeichnungen ist eine als Ganzes mit 1 bezeichnete Einspritzeinheit einer Kunststoff-Spritzgießmaschine dargestellt. Zentrales Teil dieser Einspritzeinheit 1 ist ein Einspritzeinheiten-Gehäuse 2, bei dem es sich um ein rahmen- oder kastenartiges, massives Gussteil handelt. An einem Querjoch 3 des Gehäuses 2 greifen nicht näher dargestellte Düsenanlageantriebe an, mit deren Hilfe die gesamte Einspritzeinheit 1 gegen die Einspritzdüse des Spritzgießwerkzeuges verfahren werden kann.

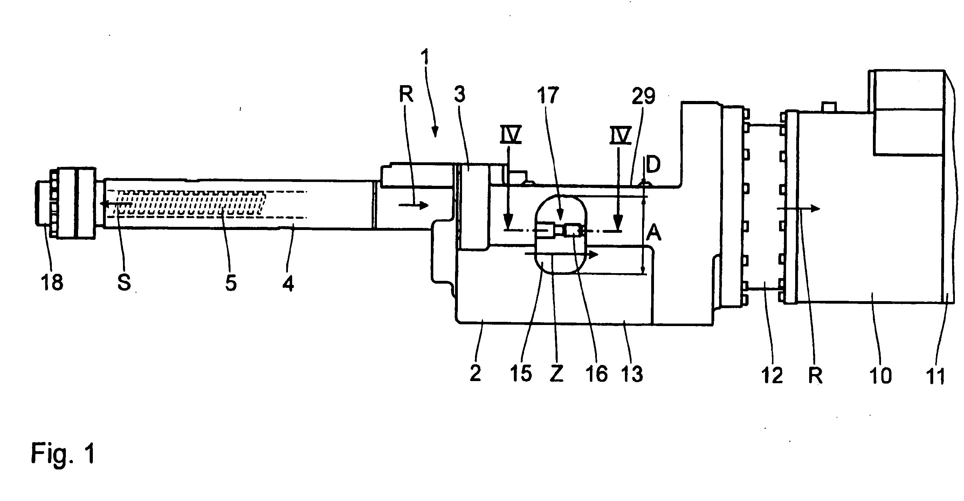

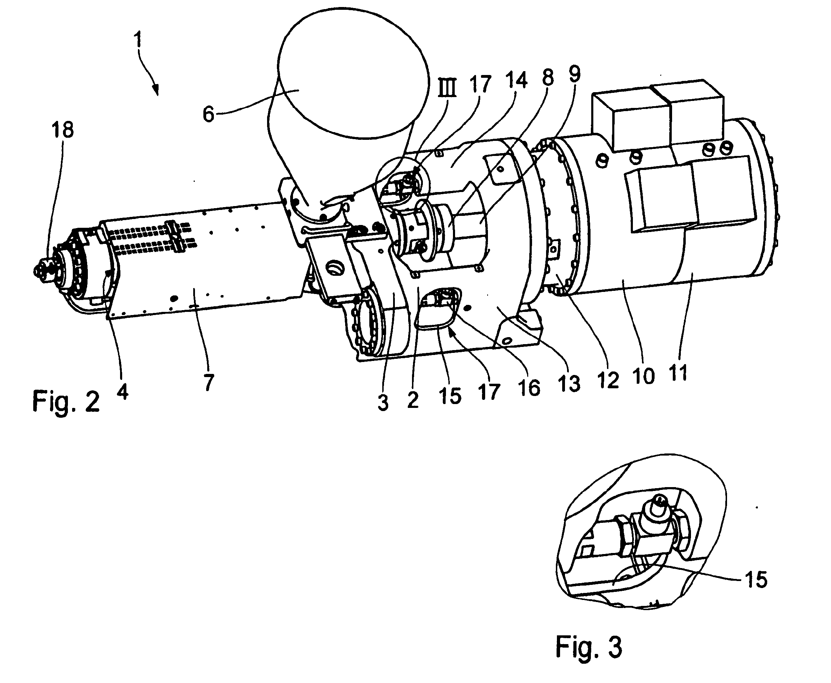

Im Bereich dieses Querjochs 3 ist ein Plastifizierzylinder 4 angeordnet, in dem eine in Fig. 1 gestrichelt angedeutete Schnecke 5 zur Aufbereitung des Kunststoff-Spritzmaterials drehbar und für die Einspritzbewegung in Axialrichtung verschiebbar gelagert ist. In Fig. 2 ist im Unterschied zu Fig. 1 noch der Einfülltrichter 6 für das aufzubereitende Kunststoff-Spritzgießmaterial und eine Temperiereinheit 7 um den Plastifizierzylinder 4 dargestellt.

Das rückwärtige Ende 8 der Schnecke 5 ist über eine Welle 9 zu den beiden koaxial hintereinander sitzenden Antriebsmotoren 10, 11 verlängert, die die Dreh- und Axialbewegung der Schnecke 5 in bekannter Weise erzeugen. Die beiden Antriebsmotoren 10, 11 sind über einen Motorflansch 12 auf der dem Querjoch 3 gegenüberliegenden Seite des Gehäuses 2 gelagert. Querjoch 3 und Motorflansch 12 sind über die beiden parallel zur Axialrichtung der Schnecke 5 verlaufenden Seitenwandungen 13, 14 des Gehäuses 2 verbunden.

Wie aus den Fig. 3 bis 5 deutlich hervorgeht, ist in diesen beiden Seitenwandungen 13, 14 jeweils eine im Wesentlichen rechteckige Aussparung 15 in Form eines in Dickenrichtung durchgehenden Durchbruchs angelegt, in der jeweils ein handelsüblicher, industrieller Standard-Zugkraftsensor 16 in noch näher zu erläuternder Weise montiert ist. Diese Zugkraftsensoren 16 bilden das Herzstück der als Ganzes mit 17 bezeichneten Spritzkraftmesseinrichtung der Einspritzeinheit.

Bevor auf deren detaillierte konstruktive Ausgestaltung eingegangen wird, soll das der Messeinrichtung 17 zugrunde liegende Prinzip erläutert werden. So wird für die Einspritzbewegung aufgrund einer entsprechenden Ansteuerung der Antriebsmotoren 10, 11 die Schnecke 5 in Richtung der Spritzdüse 18 am Frontende des Plastifizierzylinders 4 bewegt. Dadurch wird auf das aufbereitete Kunststoff-Spritzmaterial im Plastifizierzylinder 4 die in Fig. 1 mit dem Pfeil S angedeutete Spritzkraft aufgebracht. Die entsprechende Reaktionskraft R, die über die Welle 9 auf die Antriebsmotoren 10, 11 übertragen wird, pflanzt sich über die entsprechende Abstützung der Welle 9 in den Motoren 10, 11 weiter auf den Motorflansch 12 fort. Damit wird die Reaktionskraft R weiter in Form einer Zugkraft Z in die beiden Seitenwandungen 13, 14 des Gehäuses 2 eingeleitet, wobei die Zugkraft Z dann mit Hilfe der Spritzkraftmesseinrichtung 17 zu ermitteln ist. Diese Zugkraft Z führt nämlich zu einer Dehnung des Materials im Bereich der Seitenwandungen 13, 14 und damit der Aussparungen 15, die durch die beiden Zugkraftsensoren 16 detektiert werden kann.

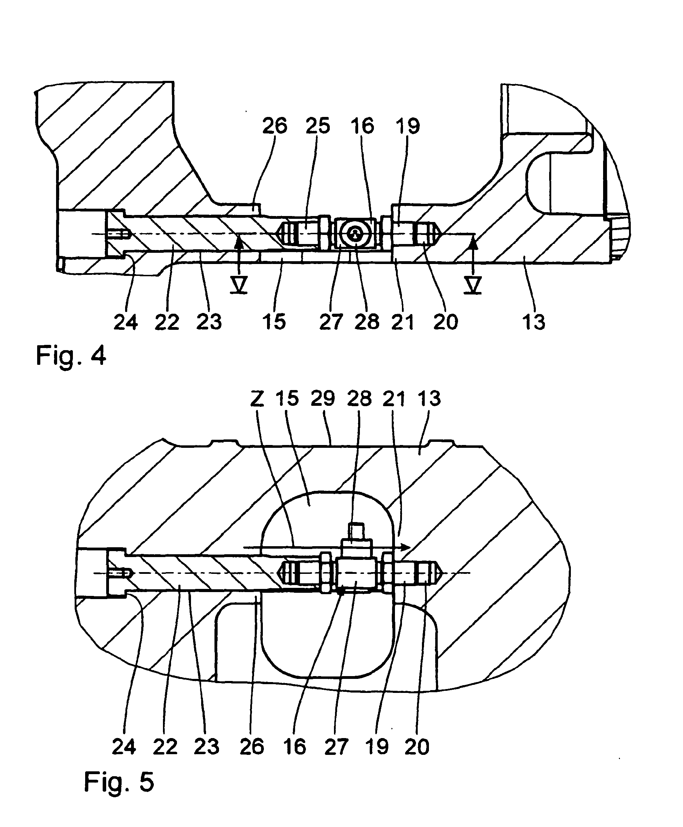

Wie insbesondere aus Fig. 5 deutlich wird, werden die Zugkraftsensoren 16 jeweils auf der einen Seite über eine Halteschraube 19 in einer Gewindebohrung 20 in der quer zur Zugkraft Z verlaufenden Randzone 21 des Gehäuses 2 zur Aussparung 15 hin fixiert. Koaxial fluchtend mit dieser Halteschraube 19 ist ein Steckbolzen 22 vorgesehen, der in einer Aufnahmebohrung 23 in der Seitenwandung 13 bzw. 14 bis zu einem Anschlag 24 eingesteckt werden kann. In seinem freien Ende, das dem Zugkraftsensor 16 zugewandt ist, ist wiederum eine koaxiale Gewindebohrung 20 vorgesehen, in der eine entgegengesetzt zur Halteschraube 19 gerichtete Halteschraube 25 des Zugkraftsensors 16 einschraubbar ist. Damit ist Letzterer krafttechnisch an die Randzonen 21, 26 der Aussparung 15 angekoppelt, eine Dehnung der jeweiligen Seitenwandung 13 bzw. 14 führt zu einer Dehnung des Messteils 27 des Zugkraftsensors 16, das entsprechende elektrische Signal kann abgegriffen und über eine Kontaktbuchse 28 und ein daran angeschlossenes (nicht dargestelltes) Signalkabel an eine entsprechende Auswerteeinheit weitergeleitet werden.

Wie aus Fig. 4 deutlich wird, ist der Zugkraftsensor 16 mit der entsprechenden Aussparung 15 in der neutralen Faser der Seitenwandung 13 bzw. 14 des Einspritzeinheiten-Gehäuses 2 angeordnet. Damit ist das Spritzkraftmesssystem 17 weitgehend frei von Störungseinflüssen, die aufgrund von Torsionskräften, Momenten oder Vibrationen auf die Seitenwandungen 13, 14 einwirken.

In Fig. 1 ist schließlich noch zum einen die Ausdehnung A der Aussparung 15 in Achsumlaufrichtung sowie der Abstand D der Aussparung 15 vom in Achsumlaufrichtung weisenden Rand 29 der Seitenwandungen 13, 14 als Maß für die Anordnung der Aussparung 15 in Achsumlaufrichtung generell angegeben. Diese beiden Größen, nämlich Ausdehnung A und Abstand D, können je nach Maschinentyp so variiert werden, dass sich unterschiedliche Größen der Spritzkraft S in einer gleichbleibenden Größenordnung der Dehnung der Aussparung 15 im Bereich des Zugkraftsensors 16 auswirken. Insoweit kann also ein und derselbe Typ von Zugkraftsensor 16 für ganz unterschiedliche Maschinenklassen mit unterschiedlichen Spritzkraft-Größenordnungen verwendet werden, was die Teile-Diversifikation und Lagerhaltung für die Produktion und Wartung solcher Spritzgießmaschinen niedrig hält.

## Patentansprüche

1. Kunststoff-Spritzgießmaschine mit einer Einspritzeinheit (1), umfassend
- ein Einspritizeinheiten-Gehäuse (2) als zentrales Teil der Einspritzeinheit (1),
- einen mit dem Einspritzeinheiten-Gehäuse (2) verbundenen Plastifizierzylinder (4),
- einer Schnecke (5), die im Plastifizierzylinder (4) zur Spritzmaterialaufbereitung drehbar und für die Einspritzbewegung in Axialrichtung verschiebbar gelagert ist,
- mit der Schnecke (5) gekoppelte, deren Dreh- und Axialbewegung erzeugende Antriebsmotoren (10, 11), die über einen Motorflansch (12) am Einspritzeinheiten-Gehäuse (2) gelagert sind, und
- eine Spritzkraftmesseinrichtung (17) zur Ermittlung der von der Schnecke (5) bei ihrer Einspritzbewegung aufgebrachten Spritzkraft (S),
- wobei die Spritzkraftmesseinrichtung (17) mindestens einen Zugkraftsensor (16) aufweist, der derart in das Einspritzeinheiten-Gehäuse (2) integriert ist, dass die von der Spritzkraft (S) erzeugte, über die Motoren (10, 11) und den Motorflansch (12) in das Einspritzeinheiten-Gehäuse (2) eingeleitete Reaktionkraft (R) der Spritzkraft (S) detektierbär ist **dadurch, gekennzeichnet, dass** der mindestens eine Zugkraftsensor (16) in einer Aussparung (15) des Einspritzeinheiten-Gehäuses (2) angeordnet und krafttechnisch an die quer zur Reaktionskraft (R) verlaufenden Randzonen (21, 26) des Einspritzeinheiten-Gehäuses (2) zur Aussparung (15) hin angekoppelt ist.

2. Spritzgießmaschine nach Anspruch 1, **dadurch gekennzeichnet, dass** der mindestens eine Zugkraftsensor (16) im Bereich der neutralen Faser der Wandung (13, 14) des Einspritzeinheiten-Gehäuses (2) angeordnet ist.

3. Spritzgießmaschine nach Anspruch 1 oder 2, **dadurch gekennzeichnet, dass** die mindestens eine Aussparung (15) eine Durchbrechung in der Wandung (13, 14) des Einspritzeinheiten-Gehäuse (2) ist.

4. Spritzgießmaschine nach einem der vorgenannten Ansprüche, **dadurch gekennzeichnet, dass** der mindestens eine Zugkraftsensor (16) ein industrieller Standard-Zugkraftsensor ist.

5. Spritzgießmaschine nach einem der vorgenannten Ansprüche, **dadurch gekennzeichnet, dass** die Spritzkraftmesseinrichtung (17) zwei gegenüberliegend bezogen auf die zentrale Spritzachse in das Einspritzeinheiten-Gehäuse (2) integrierte Zugkraftsensoren (16) aufweist.

6. Spritzgießmaschine nach einem der vorgenannten Ansprüche, **dadurch gekennzeichnet, dass** die Aussparung (15) in Anordnung und Ausdehnung in Achsumlaufrichtung derart ausgelegt ist, dass der jeweils für einen Maschinentyp abzudeckende Spritzkraft-Messbereich einer typenunabhängigen Soll-Dehnungsweite der Aussparung (15) entspricht.

## Claims

1. Plastics injection molding machine with an injection unit (1), comprising
- an injection unit housing (2) as central part of the injection unit (1),
- a plasticizing cylinder (4) connected to the injection unit housing (2),
- a screw (5) which is supported in the plasticizing cylinder (4) for rotation to prepare injection material and for displacement to effect the injection stroke in axial direction,
- drive motors (10, 11) coupled to and generating the rotation and axial movements of the screw (5) and supported on the injection unit housing (2) via a motor flange (12), and
- an injection force measuring device (17) for determining the injection force (S) applied by the screw (5) when executing its injection stroke,
- wherein the injection force measuring device (17) includes at least one tensile force sensor (16) which is integrated in the injection unit housing (2) in such a manner that the reaction force (R) of the injection force, as generated by the injection force (S) and introduced via the motors (10, 11) and the motor flange (12) into the injection unit housing (2), is detectable, **characterized in that** the at least one tensile force sensor (16) is arranged in a recess (15) of the injection unit housing (2) and placed in relation to the recess (15) in forced engagement with the marginal zones (21, 26) of the injection unit housing (2), which extend transversely to the reaction force (R).

2. Plastics injection molding machine according to claim 1, **characterized in that** the at least one tensile force sensor (16) is arranged in the area of the neutral fiber of the wall (13, 14) of the injection unit housing (2).

3. Plastics injection molding machine according to claim 1 or 2, **characterized in that** the at least one recess (15) is a through opening in the wall (13, 14) of the injection unit housing (2).

4. Plastics injection molding machine according to one of the preceding claims, **characterized in that** the at least one tensile force sensor (16) is an industrial standard tensile force sensor.

5. Plastics injection molding machine according to one of the preceding claims, **characterized in that** the injection force measuring device (17) includes two tensile force sensors (16) which are integrated in the injection unit housing (2) in opposing relationship with respect to the central injection axis.

6. Plastics injection molding machine according to one of the preceding claims, **characterized in that** the recess (15) is configured in arrangement and dimension in axial circumferential direction such that the injection force measuring range to be covered for a machine type corresponds to a type-independent desired expansion width of the recess (15).

## Revendications

1. Machine de moulage par injection de matière plastique dotée d'une unité d'injection (1) comprenant
- un boîtier d'unité d'injection (2) servant de pièce centrale de l'unité d'injection (1),
- un cylindre de plastification relié au boîtier d'unité d'injection (2),
- une vis (5) qui est logée de manière rotative dans le cylindre de plastification (4) pour la préparation de matériau d'injection et de manière mobile pour le mouvement d'injection dans le sens axial,
- des moteurs d'entraînement (10, 11) couplés à la vis (5), générant son mouvement rotatif et axial, qui sont logés par une bride de moteur (12) sur le boîtier d'unité d'injection (2) et
- un dispositif de mesure de la force d'injection (17) pour la détermination de la force d'injection (S) appliquée par la vis (5) lors de son mouvement d'injection,
- le dispositif de mesure de la force d'injection (17) présentant au moins un capteur de force de traction (16) intégré dans le boîtier d'unité d'injection (2) de telle manière que la force de réaction (R) de la force d'injection (S), générée par la force d'injection (S) et introduite par les moteurs (10, 11) et la bride de moteur (12) dans le boîtier d'unité d'injection (2) puisse être détectée, **caractérisée en ce qu'**au moins un capteur de force de traction (16) est disposé dans un évidement (15) du boîtier d'unité d'injection (2) et est accouplé à force aux zones de bord (21, 26) s'étendant transversalement à la force de réaction (R) du boîtier d'unité d'injection (2) vers l'évidement (15).

2. Machine de moulage par injection selon la revendication 1, **caractérisée en ce qu'**au moins un capteur de force de traction (16) est disposé dans la zone des fibres neutres de la paroi (13, 14) du boîtier d'unité d'injection (2).

3. Machine de moulage par injection selon la revendication 1 ou 2, **caractérisée en ce qu'**au moins un évidement (15) est un perçage dans la paroi (13, 14) du boîtier d'unité d'injection (2).

4. Machine de moulage par injection selon l'une quelconque des revendications précitées, **caractérisée en ce qu'**au moins un capteur de force de traction (16) est un capteur de force de traction standard industriel.

5. Machine de moulage par injection selon l'une quelconque des revendications précitées, **caractérisée en ce que** le dispositif de mesure de force d'injection (17) présente deux capteurs de force de traction (16) intégrés à l'opposé par rapport à l'axe d'injection central dans le boîtier d'unité d'injection (2).

6. Machine de moulage par injection selon l'une quelconque des revendications précitées, **caractérisée en ce que** l'évidement (15) est configuré en agencement et étendue dans le sens périphérique axial de telle manière que la zone de mesure de la force d'injection à couvrir respectivement pour un type de machine corresponde à une largeur d'extension de consigne indépendante du type de l'évidement (15).
